(19) Europäisches Patentamt
European Patent Office
Office européen des brevets

(11) EP 3 950 751 A1

(12) EUROPEAN PATENT APPLICATION
published in accordance with Art. 153(4) EPC

(43) Date of publication:
09.02.2022 Bulletin 2022/06

(21) Application number: 20785073.6

(22) Date of filing: 26.02.2020

(51) International Patent Classification (IPC):
*C08F 290/06* (2006.01) *C09D 4/00* (2006.01)
*C09D 191/00* (2006.01) *C08F 2/44* (2006.01)

(52) Cooperative Patent Classification (CPC):
C08F 2/44; C08F 290/06; C08L 91/00;
C08L 101/00; C09D 4/00; C09D 191/00

(86) International application number:
PCT/JP2020/007691

(87) International publication number:
WO 2020/202918 (08.10.2020 Gazette 2020/41)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 03.04.2019 JP 2019070990

(71) Applicant: Sakata INX Corporation
Osaka-shi, Osaka 550-0002 (JP)

(72) Inventors:
- HISHINUMA Keishiro
Osaka-shi, Osaka 550-0002 (JP)
- OMI Naoki
Osaka-shi, Osaka 550-0002 (JP)
- FUKUHARA Kouji
Osaka-shi, Osaka 550-0002 (JP)
- HOSAKA Kenichirou
Osaka-shi, Osaka 550-0002 (JP)

(74) Representative: V.O.
P.O. Box 87930
2508 DH Den Haag (NL)

# (54) ACTIVE ENERGY RAY-CURABLE VARNISH COMPOSITION, METHOD FOR PRODUCING SAME, AND METHOD FOR PRODUCING PRINTED MATTER USING SAME

(57) [Object]

To provide an active energy ray-curable varnish composition that can increase the content of raw materials derived from biomass and maintain the basic properties for varnish compositions, such as compatibility.

[Solution]

An active energy ray-curable varnish composition containing a compound having one or more ethylenically unsaturated bonds is used, wherein the varnish composition satisfies the following Conditions (A) and (B):
Condition (A): the varnish composition contains a specific ingredient that has no ethylenically unsaturated bonds, has an sp value of 9.0 $(cal/cm^3)^{1/2}$ to less than 11.0 $(cal/cm^3)^{1/2}$, and comprises a compound having a structure derived from animal or vegetable ingredients in a content of 0.1 mass% to 50 mass% in the entire composition; and
Condition (B): the varnish composition contains oil and fat that is derived from animals or vegetables and has an sp value of less than 9.0 $(cal/cm^3)^{1/2}$ or 11.0 $(cal/cm^3)^{1/2}$ or more in a content of less than 15 mass% in the entire composition.

EP 3 950 751 A1

## Description

### TECHNICAL FIELD

The present invention relates to an active energy ray-curable varnish composition, a method for producing the varnish composition, and a method for manufacturing printed matter with the varnish composition.

### BACKGROUND ART

After printing on the surfaces of various substrates such as films, sheets, and plates, coating with overprint varnish (OP varnish) has been widely practiced to protect the surfaces of substrates themselves and printed areas, and impart gloss to such surfaces. In the case that an active energy ray-curable varnish composition is used as the OP varnish in such surface processing, the surface of the substrate is covered with the varnish composition and then irradiated with active energy rays, such as ultraviolet rays or electron beams, leading to instant curing of the varnish composition to form glossy hardened films. This process can exhibit higher productivity as compared with conventional processes, such as vinyl-clad process. The active energy ray-curable varnish composition is preferred from the viewpoint of environmental protection because volatile organic compound (VOC) is not released into the atmosphere unlike a solvent-based coating agent. Based on these advantages, the conventional vinyl-clad process and coating process with the solvent-based agent have rapidly been replaced by the coating process with the active energy ray-curable varnish composition. Such surface coating with varnish has been widely applied to ordinary print products, such as magazine covers, posters and calendars, and the packaging field, such as carton print products, and has been familiar to our daily lives.

It is known that such an active energy ray-curable varnish composition can be used in combination with compounds necessary for curing, such as monomers or oligomers having one or more ethylenically unsaturated bonds and a variety of optional ingredients to impart various properties, such as high adhesion, high gloss and high blocking resistance (see, for example, PTLs 1 to 3).

In recent years, the activities for reductions in environmental loads have been developed in various industrial and business categories, and their common ultimate goal is to achieve the global environmental conservation. Also in the printing ink industry, the activities to promote reductions in environmental loads have been practiced from various viewpoints, and the print products that comply with the gist of such activities are given various kinds of certification marks. Examples of such certification marks include an NL regulation mark, a vegetable oil ink mark, a GP mark, and a clione mark. In this situation, the Japan Printing Ink Makers Association has recently established a novel system called an ink green mark (hereinafter referred to as IG mark). The IG mark is based on the system where the level of environmental friendliness of the ink composition and the varnish composition is categorized into three ranks depending on the rate of biomass-derived ingredients in all main ingredients that make up the print materials, such as the ink composition and the varnish composition, as criteria of the mark. In other words, this system is characterized by promoting the replacement of fossil resource-derived raw materials with biomass-derived raw materials for the purpose of reductions in environmental loads.

Also in the active energy ray-curable varnish compositions described above, the products that can be dried with lower irradiation of ultraviolet rays and the energy-saving products that can be dried with light from light emitting diodes (LEDs) having lower power consumption are commercially available, and the movement leading to reductions in environmental loads is expanding similar to other ink compositions or varnish compositions. However, the production of the active energy ray-curable ink compositions or varnish compositions requires large amounts of monomers and oligomers; hence such ink compositions or varnish compositions cannot contain high rates of biomass-derived ingredients. As a result, the criteria of certification of IG mark described above for the active energy ray-curable ink or varnish composition lacks in the rates of biomass-derived ingredients, and thereby such criteria use characteristics, such as recycling suitability and energy saving, on environmental friendliness in place of the rates of biomass-derived ingredients.

### CITATION LIST

### PATENT LITERATURE

PTL 1: JP 2014-167088A
PTL 2: JP H10-17787A
PTL 3: JP 2004-315546A

## BRIEF DESCRIPTION OF THE INVENTION

### PROBLEMS TO BE SOLVED

Under the above background, an increase in proportion of biomass-derived ingredients is socially useful and has greatly high significance also in the active energy ray-curable varnish composition. However, the monomers and oligomers used in the active energy ray-curable varnish composition have poor compatibility with the biomass-derived materials used in general offset printing ink compositions or OP varnish compositions; hence, conventional biomass-derived materials cannot be readily applied to such compositions in the current situation.

The present invention has been developed in view of the above circumstances, and an object of the present invention is to provide an active energy ray-curable varnish composition that can maintain the basic characteristics, such as compatibility of conventional varnish compositions, and increase the content of raw biomass-derived materials.

### MEANS TO SOLVE PROBLEMS

As a result of diligent studies to solve the above problems, the present inventors have found that, in an active energy ray-curable varnish composition containing a compound having one or more ethylenically unsaturated bonds, a specific ingredient that has no ethylenically unsaturated bonds, has a solubility parameter (sp) value (measured by turbidimetric titration) of 9.0 $(cal/cm^3)^{1/2}$ to less than 11.0 $(cal/cm^3)^{1/2}$, and comprises a compound including a structure derived from animal or vegetable ingredients has a good compatibility with the compound having one or more ethylenically unsaturated bonds. The specific ingredient described above can thereby be regarded as an ingredient derived from biomass. Accordingly, the inventive varnish composition containing these ingredients can be a product containing a high proportion of raw materials derived from biomass. It is also found that the specific ingredient does not have one or more ethylenically unsaturated bonds and cannot contribute to the polymerization reaction for formation of hardened films, but does not adversely affect the formation of hardened films if this ingredient has a content of 50 mass% or less in the entire varnish composition. The present invention has been completed based on such findings, and provides the following varnish composition.

The present invention provides an active energy ray-curable varnish composition containing a compound having one or more ethylenically unsaturated bonds, wherein the varnish composition satisfies the following Conditions (A) and (B):

Condition (A): the varnish composition contains a specific ingredient that has no ethylenically unsaturated bonds, has a solubility parameter (sp) value (measured by turbidimetric titration) of 9.0 $(cal/cm^3)^{1/2}$ to less than 11.0 $(cal/cm^3)^{1/2}$, and comprises a compound having a structure derived from animal or vegetable ingredients in a content of 0.1 mass% to 50 mass% in the entire composition; and

Condition (B): the varnish composition contains oil and fat that is derived from animals or vegetables and has a solubility parameter (sp) value (measured by turbidimetric titration) of less than 9.0 $(cal/cm^3)^{1/2}$ or 11.0 $(cal/cm^3)^{1/2}$ or more in a content of less than 15 mass% in the entire composition.

The specific ingredient described above is preferably at least one selected from the group consisting of: (1) a specific liquid ingredient that has no ethylenically unsaturated bonds, has a solubility parameter (sp) value (measured by turbidimetric titration) of 9.0 $(cal/cm^3)^{1/2}$ to less than 11.0 $(cal/cm^3)^{1/2}$, and is oil and fat derived from animals and vegetables or a modified product thereof; and (2) a specific resin that has no ethylenically unsaturated bonds, has a solubility parameter (sp) value (measured by turbidimetric titration) of 9.0 $(cal/cm^3)^{1/2}$ to less than 11.0 $(cal/cm^3)^{1/2}$, and comprises a structure derived from vegetable ingredients in a polymer.

The specific liquid ingredient is preferably non-edible oil or a modified product thereof.

The specific liquid ingredient is preferably at least one selected from the group consisting of castor oil, coconut oil, cashew nut shell oil, tall oil, modified products thereof, and epoxidized vegetable oil.

The present invention also provides a method of producing an active energy ray-curable varnish composition, comprising a step of dissolving the specific resin into the heated specific liquid ingredient and/or compound having one or more ethylenically unsaturated bonds to prepare a varnish.

The present invention also provides a method of manufacturing printed matter, comprising a step of applying the active energy ray-curable varnish composition.

### ADVANTAGEOUS EFFECTS OF THE INVENTION

The present invention provides an active energy ray-curable varnish composition that can increase the content of raw biomass-derived materials and maintain the basic properties for varnish compositions, such as compatibility.

EMBODIMENTS OF THE INVENTION

Now described are one embodiment of the active energy ray-curable varnish composition of the present invention, the first to third embodiments of the processes for producing the active energy ray-curable varnish composition of the present invention, and one embodiment of the method for manufacturing printed matter of the present invention. It is noted that the present invention should not be limited to the following embodiments, and can be appropriately modified within the scope of the present invention.

<Active energy ray-curable varnish composition>

The active energy ray-curable varnish composition of the present invention (hereinafter, also simply referred to as "varnish composition") has an ability to be cured by irradiation with active energy rays, such as ultraviolet rays and electron beams, and is preferably used as overprint varnish which covers the surface of print product after printing. As will be described later, the inventive varnish composition contains a compound having one or more ethylenically unsaturated bonds (e.g., monomer and oligomer), and radicals generated when irradiated with active energy rays polymerize the compound having one or more ethylenically unsaturated bonds to be cured into coating films. Accordingly, when the sticky varnish composition on the surface of print product immediately after application is irradiated with active energy rays, the varnish composition can be instantly hardened in a dried state (i.e., a tack-free state).

The inventive varnish composition can be applied to, but not limited to, printed matter produced by a means such as offset printing. Such printed matter preferably includes a packaging container. In the application to the packaging container, the cured film yielded by the curing of the inventive varnish composition has high durability and superior gloss, thereby preventing the packaging container from scratching and exhibiting high glossy aesthetics on the packaging container.

Examples of the active energy rays used in the curing of the inventive varnish composition include electron beams and ultraviolet rays. Particularly preferred active energy rays are ultraviolet rays from the viewpoint of low costs and ease of machine handling. In the use of ultraviolet rays, the inventive varnish composition needs to contain a photopolymerization initiator, which generates radicals upon photoirradiation. The wavelength of the ultraviolet rays may be appropriately determined depending on the absorption wavelength of the photopolymerization initiator to be employed, and may be 400 nm or less. Examples of the ultraviolet irradiator that generates such ultraviolet rays include metal halide lamps, high-pressure mercury lamps, excimer lamps containing rare gas, and ultraviolet light emitting diodes (LEDs). When electron beams are used in the active energy rays, the chemical bonds contained in the ingredient of the varnish composition are cleaved to generate radicals due to the irradiation of the electron beams, and these radicals can polymerize ingredients such as monomers in the varnish composition, thereby no photopolymerization initiator is required.

The inventive varnish composition contains a compound that has one or more ethylenically unsaturated bonds, and a specific ingredient that has no ethylenically unsaturated bonds, has a solubility parameter (sp) value (measured by turbidimetric titration) of 9.0 $(cal/cm^3)^{1/2}$ to less than 11.0 $(cal/cm^3)^{1/2}$, and comprises a compound having a structure derived from animal or vegetable ingredients. The key point of the present invention is the use of a compound having one or more ethylenically unsaturated bonds in combination with a specific ingredient. In conventional active energy ray-curable varnish compositions, acrylic acid and/or methacrylic acid (collectively referred to as "(meth)acrylic acid" in the present specification) compounds are used as monomers or oligomers that are main ingredients. Since these ingredients have higher solubility parameter (sp) value, they are incompatible with ingredients having lower sp value derived from biomass, such as animal or vegetable oils like soybean oil. In such a background, it has been difficult, in the active energy ray-curable varnish composition, to increase the biomass content using animal or vegetable oils, unlike offset ink compositions and conventional OP varnish compositions.

The present inventors have founded that a specific ingredient having a predetermined sp value and comprising a compound that has a structure derived from animal or vegetable ingredients can be compatible with monomers or oligomers, and does not adversely affect the curability in a content range of 50 mass% or less in the entire varnish composition even if such an ingredient has no ethylenically unsaturated bonds (that is, has no polymerizable properties). The present invention has been made based on these findings.

In other words, the inventive varnish composition is an active energy ray-curable varnish composition containing a compound having one or more ethylenically unsaturated bonds, wherein the varnish composition satisfies the following Conditions (A) and (B):

Condition (A): the varnish composition contains a specific ingredient that has no ethylenically unsaturated bonds, has a solubility parameter (sp) value (measured by turbidimetric titration) of 9.0 $(cal/cm^3)^{1/2}$ to less than 11.0 $(cal/cm^3)^{1/2}$, and comprises a compound having a structure derived from animal or vegetable ingredients in a content of 0.1 mass% to 50 mass% in the entire composition; and

Condition (B): the varnish composition contains oil and fat that is derived from animals or vegetables and has a

solubility parameter (sp) value (measured by turbidimetric titration) of less than 9.0 $(cal/cm^3)^{1/2}$ or 11.0 $(cal/cm^3)^{1/2}$ or more in a content of less than 15 mass% in the entire composition.

The inventive varnish composition may contain a photopolymerization initiator. The inventive varnish composition exhibits curability to electron beams even if the varnish composition does not contain a photopolymerization initiator, but the addition of a photopolymerization initiator can exhibit curability to light such as ultraviolet rays. Each ingredient constituting the varnish composition will now be described in sequence.

[Compound having one or more ethylenically unsaturated bonds]

The compound having one or more ethylenically unsaturated bonds is an ingredient called a monomer or an oligomer that is polymerized by radicals generated from a photopolymerization initiator or irradiation with electron beams described later into a high molecular weight. Various polymers having ethylenically unsaturated bonds, which have a higher molecular weight than oligomers, are also commercially available. Such polymers can also be crosslinked with themselves or with the monomer or oligomer into a higher molecular weight. Such polymers may thus be used as compounds having ethylenically unsaturated bonds together with the monomer or oligomer.

The monomer having one or more ethylenically unsaturated bonds can be polymerized into a high molecular weight, as described above. In many cases, the monomer is a liquid ingredient having a relatively low molecular weight before polymerization and is used as a solvent for dissolving the polymers described above into a varnish and for adjusting the viscosity of the varnish composition. Examples of the monomer include monofunctional monomers having one ethylenically unsaturated bond in the molecule and bi- or higher functional monomers having two or more ethylenically unsaturated bonds in the molecule. The bi- or higher functional monomer can mutually crosslink during the curing of the varnish composition, thereby contributing to an increase in curing rate and formation of a rigid film. The monofunctional monomer has no crosslinking ability as described above, thereby contributing to a reduction in curing contraction due to crosslinking. These monomers can be used in combination of several types as needed.

Examples of the monofunctional monomers include alkyl acrylates, such as methyl (meth)acrylate, ethyl (meth)acrylate, butyl (meth)acrylate, hexyl (meth)acrylate, octyl (meth)acrylate, dodecyl (meth)acrylate; and (meth)acrylic acid, ethylene oxide adduct (meth)acrylate, propylene oxide adduct (meth)acrylate, isobornyl (meth)acrylate, cyclohexyl (meth)acrylate, tricyclodecane monomethylol (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-phenoxypropyl (meth)acrylate, 2-hydroxy-3-butoxypropyl (meth)acrylate, 2-hydroxy-3-methoxypropyl (meth)acrylate, di(ethylene glycol) mono(meth)acrylate, tri(ethylene glycol) mono(meth)acrylate, poly(ethylene glycol) mono(meth)acrylate, di(propylene glycol) mono(meth)acrylate, poly(propylene glycol) mono(meth)acrylate, glycerol mono(meth)acrylate, acryoloxyethyl phthalate, 2-(meth)acryloyloxyethyl-2-hydroxyethyl phthalate, 2-(meth)acryloyloxypropyl phthalate, β-carboxyethyl (meth)acrylate, (meth)acrylic acid dimer, ω-carboxypolycaprolactone mono(meth)acrylate, dimethylaminoethyl (meth)acrylate, diethylaminoethyl (meth)acrylate, N-vinylpyrrolidone, N-vinylformamide, and (meth)acryloylmorpholine. These monofunctional monomers may be used alone or in combination.

Examples of the di- or higher functional monomers include difunctional monomers, such as ethylene glycol di(meth)acrylate, di(ethylene glycol) di(meth)acrylate, tri(ethylene glycol) di(meth)acrylate, poly(ethylene glycol) di(meth)acrylate, propylene glycol di(meth)acrylate, di(propylene glycol) di(meth)acrylate, tri(propylene glycol) di(meth)acrylate, poly(propylene glycol) di(meth)acrylate, butylene glycol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentane

di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-butyl-2-ethyl-1,3-propanediol di(meth)acrylate, 2,4-diethyl-1,5-pentanediol di(meth)acrylate, tricyclodecane dimethylol di(meth)acrylate, tricyclodecane dimethylol dicaplolactonate di(meth)acrylate, bisphenol A tetra(ethylene oxide) adduct di(meth)acrylate, bisphenol F tetra(ethylene oxide) adduct di(meth)acrylate, bisphenol S tetra(ethylene oxide) adduct di(meth)acrylate, hydrogenated bisphenol A tetra(ethylene oxide) adduct di(meth)acrylate, hydrogenated bisphenol F tetra(ethylene oxide) adduct di(meth)acrylate, hydrogenated bisphenol A di(meth)acrylate, hydrogenated bisphenol F di(meth)acrylate, bisphenol A tetra(ethylene oxide) adduct dicaplolactonate di(meth)acrylate, and bisphenol F tetra(ethylene oxide) adduct dicaplolactonate di(meth)acrylate; and trifunctional monomers, such as glycerol tri(meth)acrylate, trimethylolpropane tri(meth)acrylate, trimethylolpropane tricaplolactonate tri(meth)acrylate, trimethylolethane tri(meth)acrylate, trimethylolhexane tri(meth)acrylate, trimethyloloctane tri(meth)acrylate, and pentaerythritol tri(meth)acrylate; and tetra- or higher functional monomers, such as trimethylolpropane tetra(meth)acrylate, pentaerythritol tetra(meth)acrylate, pentaerythritol tetracaplolactonate tetra(meth)acrylate, diglycerol tetra(meth)acrylate, ditrimethylolpropane tetra(meth)acrylate, ditrimethylolpropane tetracaplolactonate tetra(meth)acrylate, ditrimethylolethane tetra(meth)acrylate, ditrimethylolbutane tetra(meth)acrylate, ditrimethylolhexane tetra(meth)acrylate, ditrimethyloloctane tetra(meth)acrylate, dipentaerythritol penta(meth)acrylate, dipentaerythritol hexa(meth)acrylate, tridipentaerythritol hexa(meth)acrylate, tripentaerythritol hepta(meth)acrylate, tripentaerythritol octa(meth)acrylate, and tripentaerythritol poly(alkylene oxide) hepta(meth)acrylate. These di- or higher functional monomers may be used alone or in combination.

Another type of monomer is acrylate of epoxidized vegetable oil prepared through acrylic modification of epoxidized vegetable oil. This acrylate is a compound produced by ring-opening addition polymerization of (meth)acrylic acid to epoxy groups in the epoxidized vegetable oil prepared through epoxidization of double bonds in unsaturated vegetable oil with an oxidizing agent, for example, peracetic acid or perbenzoic acid. The unsaturated vegetable oil indicates triglyceride of at least one fatty acid having at least one carbon-carbon unsaturated bond. Examples of the vegetable oil include hemp seed oil, linseed oil, perilla oil, oiticica oil, olive oil, cocoa oil, kapok oil, kaya oil, mustard oil, apricot oil, tung oil, kukui oil, walnut oil, poppy oil, sesame oil, safflower oil, radish seed oil, soybean oil, hydnocarpus oil, camellia oil, corn oil, rapeseed oil, niger oil, rice-bran oil, palm oil, castor oil, sunflower oil, grape seed oil, almond oil, pine seed oil, cottonseed oil, coconut oil, peanut oil, and dehydrated castor oil. Since this type of monomer is derived from the vegetable oil, this serves to increase the amount of biomass ingredients in the varnish composition. Several types of acrylates of epoxidized vegetable oil are commercially available and may thus be used.

Furthermore, another type of monomer includes, among modified derivatives of cashew nut shell oil described later, compounds represented by Chemical formulae (8) and (9) where one or more ethylenically unsaturated bonds are incorporated into phenolic hydroxyl groups of alkenyl-substituted phenols contained in the cashew nut shell oil. These compounds are regarded as compounds having one or more ethylenically unsaturated bonds. In addition, since these compounds are derived from cashew nut shell oil, they contribute to an increase in a biomass content in the varnish composition.

[Chemical formulae 1]

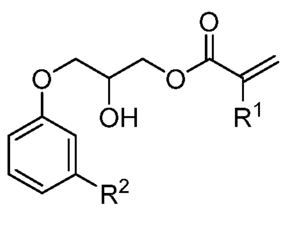

(8)

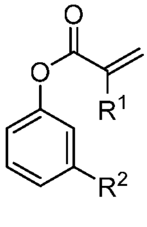

(9)

In Chemical formula (8), $R^1$ is a hydrogen atom or a methyl group, and $R^2$ is an aliphatic hydrocarbon group having 15 to 18 carbon atoms and having 0 to 3 unsaturated bonds. In Chemical formula (9), $R^1$ is a hydrogen atom or

a methyl group, and $R^2$ is an aliphatic hydrocarbon group having 15 to 18 carbon atoms and having 0 to 3 unsaturated bonds.

The oligomer is a polymerized ingredient that has a high molecular weight, as described above. The oligomer inherently has a relatively high molecular weight, and thereby can be used for imparting appropriate viscosity and curability to the varnish composition. Examples of the oligomers include epoxy-modified (meth)acrylates, such as esters formed by a reaction of (meth)acrylic acid with hydroxyl groups generated after opening of the epoxy rings contained in epoxy compounds, such as epoxy resins, using acids or bases; rosin-modified epoxidized acrylates; polyester-modified (meth)acrylates, such as esters formed by a reaction of (meth)acrylic acid with terminal hydroxyl groups of condensates of dibasic acids and diols; polyether-modified (meth)acrylates, such as esters formed by a reaction of (meth)acrylic acid with terminal hydroxyl groups of polyethers; and urethane-modified (meth)acrylates, such as esters formed by a reaction of (meth)acrylic acid with terminal hydroxyl groups of condensates of polyisocyanates and polyols. Such oligomers are commercially available under trade names, for example, Evecryl series available from Daicel Cytech Co., Ltd.; CN and SR series available from Sartomer Co., Ltd.; Aronix M-6000 series, 7000 series, 8000 series, Aronix M-1100, Aronix M-1200, and Aronix M-1600 available from Toagosei Co., Ltd.; and NK Oligo available from Shin-Nakamura Chemical Co., Ltd. These oligomers can be used alone or in combination.

The polymer having ethylenically unsaturated bonds is an ingredient that increases the molecular weight together with the monomers and oligomers, and has a high molecular weight even before irradiation with active energy rays, thereby enhancing the coating film strength of the varnish composition. Such a polymer is used, for example, in a form of solution or dispersion in a monomer that is a low-viscosity liquid. Examples of the polymer having ethylenically unsaturated bonds include poly(diallyl phthalate), acrylic resins including unreacted and unsaturated groups, and acryl-modified phenol resins.

The content of the compound having one or more ethylenically unsaturated bonds in the varnish composition is preferably 10 to 70 mass%, more preferably 20 to 60 mass%. Such content ranges of the compound having one or more ethylenically unsaturated bonds can result in both satisfactory curability and high biomass content. The content of the polymer having ethylenically unsaturated bonds is preferably 0 to 50 mass%, more preferably 0 to 30 mass%, further more preferably 0 to 20 mass%.

As described above, the inventive varnish composition satisfies Conditions (A) and (B). Conditions (A) and (B) will now be described in detail.

In Condition (A), the varnish composition contains a specific ingredient that has no ethylenically unsaturated bonds, has a solubility parameter (sp) value (measured by turbidimetric titration) of 9.0 $(cal/cm^3)^{1/2}$ to less than 11.0 $(cal/cm^3)^{1/2}$, and comprises a compound including a structure derived from animal or vegetable ingredients in a content of 0.1 mass% to 50 mass% in the entire composition. The specific ingredient that is a factor constituting Condition (A) and its content will now be described.

[Specific ingredient]

The specific ingredient has no ethylenically unsaturated bonds, has a solubility parameter (sp) value (measured by turbidimetric titration) of 9.0 $(cal/cm^3)^{1/2}$ to less than 11.0 $(cal/cm^3)^{1/2}$, and comprises a compound including a structure derived from animal or vegetable ingredients.

The specific ingredient comprises a compound including a structure derived from animal or vegetable ingredients, and has a specific sp value as described above. In other words, the specific ingredient is an ingredient itself, such as oil and fat or balsam, derived from animal or vegetable ingredients or a modified ingredient thereof, and is an ingredient derived from biomass. Since these ingredients have specific sp values, they are appropriately compatible with ingredients for polymerization, such as monomers and oligomers.

The specific ingredient, which has no ethylenically unsaturated bonds, is not involved in the polymerization reaction, unlike monomers and oligomers. A large content of specific ingredient may adversely affect the curability of the varnish composition. In this regard, the studies by the present inventors have revealed that a content of 50 mass% or less of the specific ingredient does not adversely affect the curability of the varnish composition. Accordingly, the content of the specific ingredient is limited to 50 mass% or less in the present invention. The upper limit is more preferably 30 mass%. The content of the specific ingredient is also limited to be 0.1 mass% or more. The lower limit is more preferably 10 mass%.

The specific ingredient may be a compound including a structure derived from animal or vegetable ingredients, and the compound may include various materials, such as crude animal or vegetable-derived oils and fats, modified animal or vegetable-derived oils and fats, polymers having structures of animal or vegetable-derived oils and fats, and polymers containing ingredients derived from animals and vegetables. Examples of "ingredients derived from animals and vegetables" in the polymers containing the ingredients derived from animals and vegetables include rosins and terpenes.

The specific ingredients described above can be classified into specific liquid ingredients and specific resins.

The inventive varnish composition may contain only a specific liquid ingredient as a specific ingredient, may contain only a specific resin as a specific ingredient, or may contain a specific liquid ingredient and a specific resin as a specific ingredient. The specific liquid ingredient and the specific resin will now be described.

[Specific liquid ingredient]

The specific liquid ingredient is animal or vegetable-derived oil and fat that has no ethylenically unsaturated bonds and has a solubility parameter (sp) value (measured by turbidimetric titration) of 9.0 $(cal/cm^3)^{1/2}$ to less than 11.0 $(cal/cm^3)^{1/2}$, or a modified product thereof. The oil and fat having such an sp value is mostly inedible and is useful because the satisfactory biomass content can be achieved without causing the inanition issue. Although the specific liquid ingredient is not polymerizable, the studies by the present inventors have revealed that not only the influence of this ingredient on the curability of the varnish composition can be negligible, but also coating with the inventive varnish composition containing the specific liquid ingredient gives print products with superior gloss based on the following reasons: Since the specific liquid ingredient has no ethylenically unsaturated bonds and does not rapidly polymerize in the presence of radicals, the varnish composition containing the specific liquid ingredient can still maintain the flowabilty during the polymerization of the ingredients such as monomers due to the presence of radicals in the varnish composition after printing, thereby contributing to an improvement in leveling.

Since the specific liquid ingredient has high compatibility with monomers and oligomers, the content of the specific liquid ingredient in the varnish composition may have no upper limit from the viewpoint of compatibility. However, the content of the specific liquid ingredient in the varnish composition is limited to 50 mass% or less in the present invention from the viewpoint of maintaining the properties, such as curability. The upper limit is more preferably 30 mass%. The content of the specific liquid ingredient in the varnish composition is also limited to be preferably 0.1 mass% or more. The lower limit is more preferably 10 mass%. The specific liquid ingredient preferably exhibits a liquid state at normal temperature. The "liquid state at normal temperature" indicates that the varnish composition is in a liquid state at a temperature in a storage environment or a printing environment. Examples of such normal temperature include about 0 to 50°C.

The sp value is a solubility parameter and can be measured by turbidimetric titration, which is a simple and practical measurement. The sp value is calculated in accordance with the following expression of K. W. Suh and J. M. Corbett (see J. Appl. Polym. Sci. 1968, 12,2359 on calculation of the sp value):

$$\text{sp value} = (V_{ml}^{1/2} \cdot \delta H + V_{mh}^{1/2} \cdot \delta D)/(V_{ml}^{1/2} + V_{mh}^{1/2})$$

In the turbidimetric titration, 0.5 g of sample is dissolved in 10 mL of toluene or trimethylolpropane triacrylate (TMPTA), which is a good solvent, and then n-hexane, which is a poor solvent having a low sp value, is gradually added to the resultant solution while the volume of titration H (mL) is recorded at a turbid point. Similarly, ethanol, which is a poor solvent having a high sp value, is gradually added to the toluene solution while the volume of titration D (mL) is recorded at a turbid point. The values H and D are substituted into the following expressions to calculate $V_{ml}$, $V_{mh}$, $\delta H$ and $\delta D$, and these values can be substituted into the expression described above to calculate the sp value.

The molecular volume and sp value of each solvent used in the turbidimetric titration are as follows:

(Molecular volume of good solvent) φ0, toluene: 106.28 mL/mol, TMPTA: 279.55 mL/mol
(Molecular volume of poor solvent having low sp value) φl, n-hexane: 131.61 mL/mol
(Molecular volume of poor solvent having high sp value) φh, ethanol: 58.39 mL/mol
(SP value of each solvent) toluene: 9.14, TMPTA: 9.88, n-hexane: 7.28, ethanol: 12.58

$$V_{ml} = (\varphi 0 \cdot \varphi 1)/\{(1-VH) \cdot \varphi 1 + VH \cdot \varphi 0\}$$

$$V_{mh} = (\varphi 0 \cdot \varphi h)/\{(1-VD) \cdot \varphi h + VD \cdot \varphi 0\}$$

$$VH = H/(M+H)$$

$$VD = D/(M+D)$$

$$\delta H = (\delta 0 \cdot M)/(M+H)+(\delta l \cdot H)/(M+H)$$

$$\delta D = (\delta 0 \cdot M)/(M+D)+(\delta l \cdot D)/(M+D)$$

δ0: sp value of good solvent
δl: sp value of poor solvent having low sp value
δh: sp value of poor solvent having high sp value
H: volume of titration of poor solvent having low sp value (mL)
D: volume of titration of poor solvent having high sp value (mL)
M: volume of good solvent (mL)
VH: volume fraction of titration of poor solvent having low sp value (%)
VD: volume fraction of titration of poor solvent having high sp value (%)

The term "animal or vegetable-derived oil and fat" usually means triglycerides such as animal and vegetable oils, but broadly means oily substances derived from animals and vegetables in the present invention. The modified products of animal or vegetable-derived oil and fat include those having sp values in the range described above after chemical modification of the animal or vegetable-derived oil and fat regardless of whether or not its sp value is in the above range. Examples of such modified products include triglyceride esters of fatty acids having high sp values, such as coconut oil, castor oil and tall oil, hardened castor oil, polymerized castor oil, unsaturated animal or vegetable oils or epoxidized products of fatty acids thereof, polymers of cashew nut shell oil, and modified derivatives of cashew nut shell oil. The term "having no ethylenically unsaturated bonds" indicates that substituent groups, such as acryloyl groups, methacryloyl groups and vinyl groups, are not included, which can rapidly polymerize in the presence of radicals.

An unsaturated animal or vegetable oil or an epoxidized product of a fatty acid moiety thereof (hereinafter, appropriately abbreviated as "epoxidized oil and fat") is an ester of a fatty acid having at least one epoxy group and an alcohol. Such epoxidized oils and fats include not only triglycerides having epoxy groups but also esters of fatty acids having epoxy groups and alcohols (including monohydric alcohols or polyhydric alcohols). Examples of such alcohols include, but not limited to, alcohols having 1 to 14 carbon atoms, such as glycerol, methanol, ethanol, propanol, 2-propanol, and 2-ethylhexanol. In polyhydric alcohols such as glycerol, at least one fatty acid having at least one epoxy group may be condensed (i.e., an ester bond is formed), or multiple fatty acids each having at least one epoxy group may be condensed. In the case of multiple fatty acids, the fatty acids may be selected independently of each other. Since the epoxidized oil and fat exhibits a high sp value due to the presence of one or more epoxy groups in the molecule, various animal or vegetable oils or esters of fatty acids therefrom having an inherently low sp value may be used as raw materials and epoxidized to produce the epoxidized oil and fat.

The epoxy group is a three-membered cyclic ether (also referred to as "oxylane or alkylene oxide") where an oxygen atom is bonded to each of two carbon atoms already bonded to each other. Examples of epoxidized oil and fat include epoxidized soybean oil (ESO), epoxidized corn oil, epoxidized sunflower oil, epoxidized linseed oil, epoxidized canola oil, epoxidized rapeseed oil, epoxidized safflower oil, epoxidized tall oil, epoxidized. tung oil, epoxidized fish oil, epoxidized beef tallow oil, epoxidized castor oil, epoxidized methyl stearate, epoxidized butyl stearate, epoxidized 2-ethylhexyl stearate, epoxidized stearyl stearate, 3,4-epoxicyclohexylmethyl-3,4-epoxycyclohexanecarboxylate epoxidized soybean oil, epoxidized propylene glycol dioleate, epoxidized palm oil, and epoxidized fatty acid methyl ester.

An epoxidized oil and fat can be prepared by various processes. For example, an epoxidized oil and fat having a triglyceride skeleton can be prepared through oxidation of vegetable oil or animal oil having unsaturated bonds in fatty acid moieties with an appropriate oxidizing agent or peroxide. In addition, an epoxidized oil and fat that is a fatty acid ester not having a triglyceride skeleton is prepared through the steps of: being subjected to esterification, ester exchange, or ester interchange reaction by reaction of an animal or vegetable oil-derived fatty acid having unsaturated bonds with an alcohol (either monool or polyol) to produce a fatty acid ester; and further oxidizing the fatty acid ester with an appropriate oxidizing agent or peroxide. Such a process for preparation is merely one example. Another process may be employed, or commercially available epoxidized oils and fats may be used.

Cashew nut shell oil, also referred to as "cashew nut shell liquid", is an oily liquid contained in cashew nut shells yielded as by-product during collection of natural cashew nut fruits used in food, and contains, for example, anacardic acid, cardol, 2-methyl cardol, and cardanol. Among these compounds, cardanol and cardol are compounds where hydroxyl groups and linear hydrocarbons are bonded to aromatic rings, 2-methylcardanol is a compound where a methyl group is bonded to an aromatic ring of cardanol, and cardanolic acid is a compound where a carboxyl group is bonded to an aromatic ring of cardanol, all of these compounds being regarded as alkenyl-substituted phenols. The alkenyl group contained therein is an aliphatic hydrocarbon group having 15 to 18 carbon atoms, and has 1 to 3 unsaturated bonds in the chain. The unsaturated bonds included in the alkenyl group are contained in the middle of the linear

hydrocarbon group, and are different from the ethylenically unsaturated bonds. Various grades of cashew nut shell oils are commercially available, and such commercially available products may thus be used in the present invention. An extensive lineup of products exists depending on, for example, the purity, color, and odor of cardanol. Such a lineup includes Cardolite™ NX-2021, NX-2022, NX-2023D, NX-2023, UltraLITE 2023, NX-2024, NX-2025, and NX-2026 available from Cardolite Corporation, and CNSL, LB-7000, and LB-7250 available from Tohoku Chemical industries, Ltd.

Modified derivatives of cashew nut shell oil include those where various groups are introduced into the phenolic hydroxyl groups of alkenyl-substituted phenols contained in cashew nut shell oil, those where various substituents are introduced into unsaturated bonds of alkenyl groups, and those where the unsaturated bonds of alkenyl groups are oxidized and then epoxidized. Various modified derivatives are commercially available, and such commercially available products may thus be used in the present invention.

Among such modified derivatives, a compound represented by any of Chemical formulae (1) to (4) is preferred.

[Chemical formulae 2]

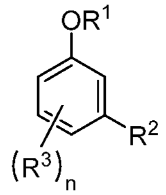
(1)

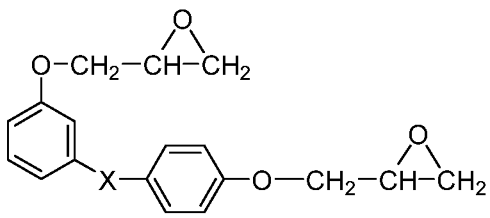
(2)

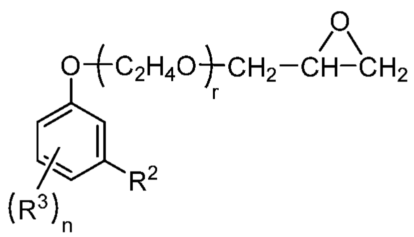
(3)

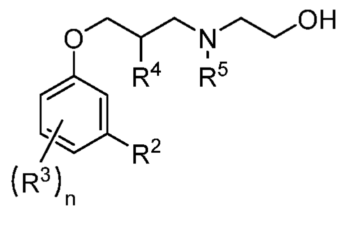
(4)

In Chemical formula (1), $R^1$ is a hydrogen atom, a glycidyl group, $-(CH_2)_mOH$ (m is an integer of 1 to 3), $-(C_2H_4O)_p-H$ (p is an integer of 1 to 15), or $-(CH_2CH(CH_3)O)_q-H$ (q is an integer of 1 to 15), $R^2$ is an aliphatic hydrocarbon group having 15 to 18 carbon atoms and having 0 to 3 unsaturated bonds, or a group where part or all of unsaturated bonds contained in the aliphatic hydrocarbon is oxidized to form an epoxy ring, and each $R^3$ is an independently $OR^1$, an alkyl group or a carboxyl group having 1 to 3 carbon atoms, n being an integer of 0 to 4.

Examples of commercially available products of the compound represented by Chemical formula (1) include Cardolite™ LITE2020, Cardolite™ NC-513, NC-510, GX-5166, GX-5167, GX-5170, GX-5248, GX-5190, GX-5191, and GX-2551 available from Cardolite Corporation. Among these products, LITE2020 is an alkenyl-substituted phenyl ether compound where $R^1$ is $-CH_2CH_2OH$, $R^2$ is an alkenyl group having 15 carbon atoms, and n is 0; NC-513 is an alkenyl-substituted phenylglycidyl ether where $R^1$ is glycidyl group, $R^2$ is an alkenyl group having 15 carbon atoms, and n is 0; NC-510 is an alkenyl-substituted phenol where $R^1$ is a hydrogen atom, $R^2$ is an alkenyl group having 15 carbon atoms,

and n is 0; GX-5166, GX-5167, and GX-5170 are alkenyl-substituted phenylethyl oxylates where $R^1$ is $-(C_2H_4O)_p-H$ (p is 7 in GX-5166, p is 9 in GX-5167, and p is 12 in GX-5170), $R^2$ is an alkenyl group having 15 carbon atoms, and n is 0; and GX-5243, GX-5190 and GX-5191 are alkenyl substituted phenylpropyl oxylates where $R^1$ is $-(CH_2CH(CH_3)O)_q-H$ (q is 1 in GX-5243, q is 7 in GX-5190, and q is 9 in GX-5191), $R^2$ is an alkenyl group having 15 carbon atoms, and n is 0. GX-2551 is a mixture of compounds represented by Chemical formulae (5-1), (5-2) and (5-3), and is epoxidized cardanol where $R^1$ is a glycidyl group, $R^2$ is a group where one or more unsaturated bonds contained in an alkenyl group having 15 carbon atoms are oxidized to form an epoxidized ring, and n is 0.

[Chemical formulae 3]

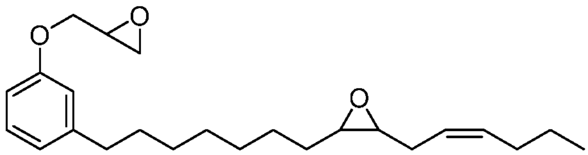

(5-1)

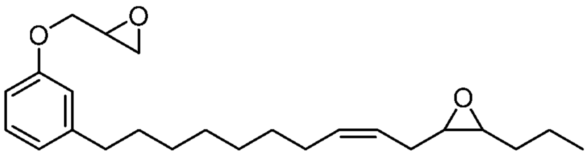

(5-2)

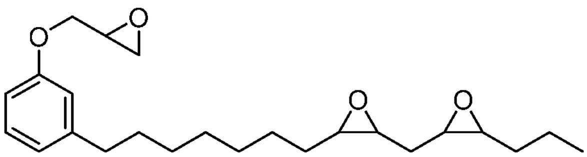

(5-3)

In Chemical formula (2), X is a linear or branched aliphatic hydrocarbon group having 15 to 18 carbon atoms and having 0 to 3 unsaturated bonds. Examples of commercially available products of the compound represented by Chemical formula (2) include Cardolite™ NC-514 available from Cardolite Corporation.

In Chemical formula (3), $R^2$, $R^3$ and n are the same as those in Chemical formula (1), and r is an integer of 1 to 5. Examples of commercially available products of the compound represented by Chemical formula (3) include Cardolite™ GX-2520 available from Cardolite Corporation.

In Chemical formula (4), $R^2$, $R^3$ and n are the same as those in Chemical formula (1), $R^4$ is a hydrogen atom or a hydroxyl group, and $R^5$ is a hydrogen atom or $-C_2H_4OH$. Examples of commercially available products of the compound represented by Chemical formula (4) include Cardolite™ GX-9301 and GX-9302 available from Cardolite Corporation.

Examples of the polymer of cashew nut shell oil preferably include a condensate of cashew nut shell oil and/or a modified derivative thereof with formaldehyde. One example of such a condensate is represented by Chemical formula (6).

[Chemical formula 4]

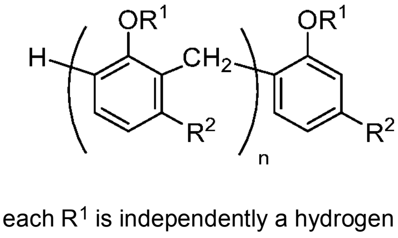

(6)

In Chemical formula (6), each $R^1$ is independently a hydrogen atom, $-(CH_2)_mOH$ (m is an integer of 1 to 3), or

a glycidyl group, and each $R^2$ is independently an aliphatic hydrocarbon group having 15 to 18 carbon atoms and having 0 to 3 unsaturated bonds, and n is an integer of 1 or more.

Examples of commercially available products represented by Chemical formula (6) include Cardolite™ NC-547 and NX-4000 series available from Cardolite Corporation. NC-547 is a condensate of cardanol and a cardanol-modified derivative with formaldehyde and has a structure represented by Chemical formula (7-1). The NX-4000 series includes condensates of cardanol with formaldehyde and has a structure represented by Chemical formula (7-2).

[Chemical formulae 5]

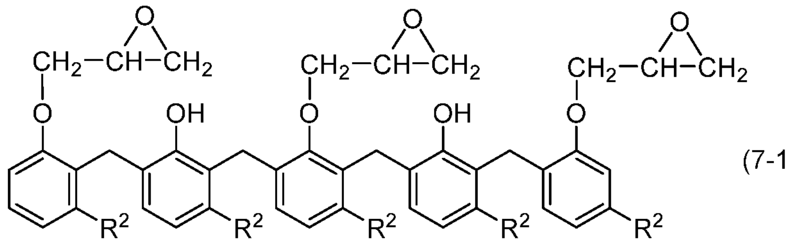

(7-1)

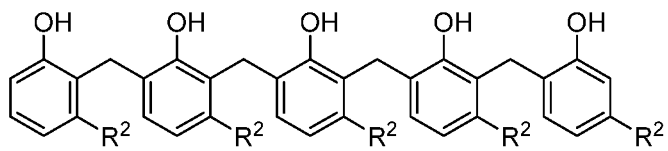

(7-2)

In Chemical formulae (7-1) and (7-2), each $R^2$ is independently an aliphatic hydrocarbon group having 15 to 18 carbon atoms and having 0 to 3 unsaturated bonds.

The specific liquid ingredient is preferably non-edible oil and fat, or a modified product thereof. The non-edible oil and fat in the present invention refers to all oils and fats that are not suitable for food. If oils and fats having an sp value of less than 9.0 $(cal/cm^3)^{1/2}$ are chemically modified to yield a modified products having an sp value of 9.0 $(cal/cm^3)^{1/2}$ or more, the modified products are categorized into a specific liquid ingredient defined in the present invention.

Among these specific liquid ingredients, at least one specific liquid ingredient is preferably selected from the group consisting of castor oil, coconut oil, cashew nut shell oil, tall oil, modified products thereof, and epoxidized vegetable oil.

[Specific resin]

The specific resin, having no ethylenically unsaturated bonds, has a structure derived from vegetable ingredients in a polymer, and has a solubility parameter (sp) value (measured by turbidimetric titration) of 9.0 $(cal/cm^3)^{1/2}$ to less than 11.0 $(cal/cm^3)^{1/2}$. Examples of such specific resins can include terpenephenol resins, rosin-modified maleic acid resins, rosin-modified phenol resins, rosin-modified alkyd resins, polymerized rosins, disproportionated rosins, polyamide resins, and cashew polymers. Such resins have been widely used in conventional offset ink compositions and OP varnish compositions. Since these resins are derived from vegetable ingredients, such as terpenes and rosins, they are useful for an achievement of high biomass content, but have poor compatibility with monomers and oligomers, thereby such resins cannot be used in active energy ray-curable varnish compositions. However, the studies by the present inventors have revealed that the specific resin itself has high compatibility with monomers and oligomers, and the combination of the specific resin with the specific liquid ingredient can lead to a varnish having high compatibility with the monomers and the oligomers. As described above, in the rosin-modified phenol resin and the rosin-modified maleic acid resin, the rosin constituting these resins is a biomass-derived ingredient, and in the rosin-modified alkyd resin, the long-chain fatty acid is also a biomass-derived ingredient in addition to the rosin. Accordingly, the inventive varnish composition contains these specific resins and thus has a higher biomass content.

Rosin-modified products, such as terpenephenol resins, rosin-modified maleic acid resins, rosin-modified phenol resins, rosin-modified alkyd resins, polymerized rosins, and disproportionated rosins, are all commercially available and can be easily supplied. Such commercially available specific resins may be used, or the specific resins synthesized

by known means may be used.

The content of the specific resin in the varnish composition is preferably about 5 mass% to 30 mass%, more preferably about 5 mass% to 15 mass%.

The specific resin may be dissolved in monomers or oligomers and/or a specific liquid ingredient at about 70 to 250°C into a varnish. The specific resin is preferably used in the preparation of a varnish composition after converting into a varnish in such a way.

In Condition (B), the varnish composition contains animal or vegetable-derived oil and fat having a solubility parameter (sp) value of less than 9.0 $(cal/cm^3)^{1/2}$ or 11.0 $(cal/cm^3)^{1/2}$ or more in a content of less than 15 mass% in the entire composition. The animal or vegetable-derived oil and fat defined in Condition (B), which has an sp value that is too low or too high, can be regarded as an ingredient having poor compatibility with the monomers and oligomers contained in the varnish composition. A large content of ingredient in the inventive varnish composition causes problems, such as precipitation of the ingredients in the varnish composition and white turbidness of the varnish composition. Accordingly, the upper limit of the content should be 15 mass%. The upper limit is preferably 10 mass%. The inventive varnish composition preferably does not contain animal or vegetable-derived oil and fat having an sp value of less than 9.0 $(cal/cm^3)^{1/2}$ or 11.0 $(cal/cm^3)^{1/2}$ or more.

Examples of the animal or vegetable-derived oil and fat having an sp value of less than 9.0 $(cal/cm^3)^{1/2}$ include hemp seed oil, linseed oil, perilla oil, oiticica oil, olive oil, cocoa oil, kapok oil, kaya oil, mustard oil, apricot oil, tung oil, kukui oil, walnut oil, poppy oil, sesame oil, safflower oil, radish seed oil, soybean oil, hydnocarpus oil, camellia oil, corn oil, rapeseed oil, niger oil, rice-bran oil, palm oil, sunflower oil, grape seed oil, almond oil, pine seed oil, cottonseed oil, peanut oil, dehydrated castor oil, refined avocado oil, kukui nut oil, sweet almond oil, corn germ oil, pistachio nut oil, hazelnut oil, macadamia nut oil, meadow foam oil, and rose hip oil. If these oils and fats undergo modification and then have an sp value of 9.0 $(cal/cm^3)^{1/2}$ to less than 11.0 $(cal/cm^3)^{1/2}$, they are regarded as specific ingredients (in particular, specific liquid ingredients) in Condition (A) described above.

[Photopolymerization initiator]

The photopolymerization initiator is an ingredient that generates radicals by irradiation with ultraviolet rays, and the resultant radicals polymerize the compound having one or more ethylenically unsaturated bonds described above, thereby curing the varnish composition. The photopolymerization initiator may be any material that generates radicals by irradiation with active energy rays. As described above, the inventive varnish composition can also be cured with electron beams as active energy rays without addition of photopolymerization initiator to the inventive varnish composition.

Examples of the photopolymerization initiator include benzophenone, diethylthioxanthone, 2-methyl-1-(4-methylthio)phenyl-2-morpholinopropane-1-one, 4-benzoyl-4'-methyldiphenylsulfide, 1-chloro-4-propoxythioxanthone, isopropylthioxanthone, 2-hydroxy-2-methyl-1-phenylpropane-1-one, 1-hydroxycyclohexylphenyl ketone, bis-2,6-dimethoxybenzoyl-2,4,4-trimethylpentylphosphine oxide, 1-[4-(2-hydroxyethoxy)-phenyl]-2-hydroxy-2-methyl-1-propane-1-one, 2,2-dimethyl-2-hydroxyacetophenone, 2,2-dimethoxy-2-phenylacetophenone, 2,4,6-trimethylbenzyl-diphenylphosphine oxide, and 2-benzyl-2-dimethylamino-1-(morpholinophenyl)-butane-1-one. Such photopolymerization initiators are commercially available under trade names, for example, Irgacure 907, Irgacure 369, Irgacure 184, Irgacure 379, Irgacure 819, and TPO available from BASF SE; and DETX available from Lamberti S.p.A. These photopolymerization initiators can be used alone or in combination.

The content of the photopolymerization initiator in the varnish composition is preferably 3 to 30 mass%, more preferably 2 to 15 mass%, further more preferably 2 to 13 mass%. Such a range of content of the photopolymerization initiator in the varnish composition preferably results in sufficient curing of the varnish composition and compatibility between satisfactory internal curing and material costs.

[Other ingredients]

The inventive varnish composition may further contain any other optional ingredient in addition to the ingredients described above. Examples of such optional ingredients include polymerization inhibitors and waxes, such as polyethylene wax, olefin wax and Fischer-Tropsch wax.

Examples of the polymerization inhibitor preferably include phenol compounds such as butylhydroxytoluene, tocopherol acetate, nitrosamine, benzotriazole, and hindered amine. More preferred is butylhydroxytoluene. The addition of such polymerization inhibitors to the varnish composition can prevent an increase in viscosity of the varnish composition caused by the progress of polymerization reaction during storage. The content of the polymerization inhibitor is, for example, about 0.01 to 1 mass% in the varnish composition.

<First embodiment of preparation of active energy ray-curable varnish composition>

One aspect of the present invention also provides preparation of a varnish composition containing the specific resin described above among the active energy ray-curable varnish compositions. The first embodiment of the inventive preparation is preparation of an active energy ray-curable varnish composition containing the specific resin, the process comprising a step of dissolving the specific resin in the heated specific liquid ingredient to prepare a varnish. Such preparation will now be described focusing on new information without redundant description of details that have been already described in the precedent paragraphs.

The step of dissolving the specific resin in the heated specific liquid ingredient to prepare the varnish involves adding the specific resin to the specific liquid ingredient, and then stirring the mixture with heating to about 70 to 250°C. Although a typical dissolution time ranges from about 30 to 60 minutes, the dissolution time may be appropriately adjusted depending on the state of dissolution.

In the preparation of the varnish, the mixing ratio by mass of the specific resin to the specific liquid ingredient may be, but not limited to, about 20:80 to 40:60 (specific resin: specific liquid ingredient).

A varnish composition is prepared through mixing the resultant varnish with various ingredients described above. The content of the varnish in the varnish composition is preferably about 20 to 70 mass%, more preferably about 20 to 60 mass%, further more preferably about 20 to 50 mass%.

<Second embodiment of preparation of active energy ray-curable varnish composition>

The second embodiment of the inventive preparation will now be described. The preparation in the embodiment includes a step of dissolving the specific resin in the heated liquid compound having one or more ethylenically unsaturated bonds to prepare a varnish. Such preparation will now be described focusing on new information without redundant description of details that have been already described in the precedent paragraphs.

The liquid compound having one or more ethylenically unsaturated bonds corresponds to the monomers and oligomers described above. The term "liquid" as used in the present specification indicates a liquid state in a range of approximately 0°C to 70°C. The specific resin having an sp value of 9.0 $(cal/cm^3)^{1/2}$ to less than 11.0 $(cal/cm^3)^{1/2}$ can be dissolved in such monomers or oligomers to prepare a varnish, and the preparation in this embodiment can thereby be completed.

The step of dissolving the specific resin in the liquid compound having one or more ethylenically unsaturated bonds to prepare the varnish involves adding the specific resin to the liquid compound having one or more ethylenically unsaturated bonds, and then stirring the mixture with heating to about 70 to 250°C. Although a typical dissolution time ranges from about 30 to 60 minutes, the dissolution time may also be appropriately adjusted depending on the state of dissolution.

In the preparation of the varnish, the mixing ratio by mass of the specific resin to the liquid compound having one or more ethylenically unsaturated bonds may be, but not limited to, about 20:80 to 40:60 (specific resin: liquid compound having one or more ethylenically unsaturated bonds).

<Third Embodiment of preparation of active energy ray-curable varnish composition>

The third embodiment of the inventive preparation will now be described. The preparation in the embodiment involves a step of dissolving the specific resin in the heated specific liquid ingredient and liquid compound having one or more ethylenically unsaturated bonds to prepare a varnish. Such preparation will now be described focusing on new information without redundant description of details that have been already described in the precedent paragraphs.

As described above, the specific liquid ingredient having an sp value of 9.0 $(cal/cm^3)^{1/2}$ to less than 11.0 $(cal/cm^3)^{1/2}$ has high compatibility with the compound having one or more ethylenically unsaturated bonds or the specific resin. In the preparation of this embodiment, the specific resin is dissolved in the specific liquid ingredient and a liquid compound having one or more ethylenically unsaturated bonds to prepare a varnish. The step of dissolving the specific resin in the specific liquid ingredient and the liquid compound having one or more ethylenically unsaturated bonds to prepare the varnish involves adding the specific resin to the specific liquid ingredient and the liquid compound having one or more ethylenically unsaturated bonds, and then stirring the mixture with heating to about 70 to 250°C. Although a typical dissolution time ranges from about 30 to 60 minutes, the dissolution time may be appropriately adjusted depending on the state of dissolution.

In the preparation of the varnish, the mixing ratio by mass of the specific resin to the specific liquid ingredient and the liquid compound having one or more ethylenically unsaturated bonds may be, but not limited to, about 20:80 to 40:60 (specific resin: specific liquid ingredient and liquid compound having one or more ethylenically unsaturated bonds).

<Production of printed matter>

One aspect of the present invention also provides a process for manufacturing printed matter. The process involves a step of applying the active energy ray-curable varnish composition of the present invention. The inventive process for manufacturing printed matter involves printing on substrates with an ink composition and then applying the inventive varnish composition to the surfaces of substrates. The processes for applying the varnish composition to the surfaces of substrates include, but not limited to, known application processes. Examples of such application processes include those using a flexographic coater such as a roll coater and a chamber coater, those using a gravure coater, and those using offset printing.

Irradiation of a wet varnish composition applied to the surface of printed matter with active energy rays can instantly turn into a dried state. Known active energy rays, such as electron beams or ultraviolet rays, can be employed.

EXAMPLES

The present invention will now be described in more detail by illustrating the following examples, but the present invention is not limited to these examples. In the following description, "%" indicates "mass%" and "parts" indicates "parts by mass" unless otherwise specified. The unit of sp value is $(cal/cm^3)^{1/2}$.

[Preparation of Varnish 1]

Rosin-modified alkyd resin (50 parts by mass, sp value: 10.0) was placed into and was dissolved in tall oil (50 parts by mass, sp value: 10.1) at 200°C for 60 minutes to prepare Varnish 1.

[Preparation of Varnish 2]

Rosin-modified alkyd resin (50 parts by mass, sp value: 10.0) was placed into and was dissolved in soybean oil (50 parts by mass, sp value: less than 9.0) at 200°C for 60 minutes to prepare Varnish 2.

[Preparation of varnish composition]

Dipentaerythritol hexaacrylate (DPHA), trimethylolpropane triacrylate (TMPTA), epoxy-modified acrylate oligomer, irgacure 184 (trade name, available from BASF SE, photopolymerization initiator; IR-184), irgacure 369 (trade name, available from BASF SE, photopolymerization initiator; IR-369), castor oil (sp value: 9.7), cashew nut shell liquid (CNSL, sp value: 10.1), modified product of cashew nut shell liquid (Cardolite™ UL- 513 available from Cardorite Corporation), tall oil (sp value: 10.1), soybean oil (sp value: less than 9), linseed oil (sp value less than 9), Varnish 1, or Vanish 2 were mixed according to formulations shown in Tables 1 and 2 to prepare the varnish compositions of Examples 1 to 9 and Comparative examples 1 to 4. The content of each ingredient in Tables 1 and 2 is illustrated in parts by mass. Among these Examples and Comparative examples, the varnish composition of Example 8 is to be cured with electron beams, and the remaining varnish compositions are to be cured with ultraviolet rays.

[Evaluation of stability]

Each varnish composition in these Examples and Comparative examples was subjected to evaluation after being left at room temperature (25°C) for 24 hours. The vanish compositions exhibiting precipitation or white turbidness in this evaluation have poor compatibility and do not have stability in practical use. The results of the evaluation were ranked into the following two-stage criterion, and the ranks are shown on the column "Stability" of Tables 1 and 2.

(Ranks)

O: The varnish composition still remains transparent even after 24 hours, indicating good stability.
X: The varnish composition exhibits precipitation or white turbidness after 24 hours, indicating poor stability.

[Evaluation of curability]

Varnish compositions of Examples and Comparative examples were each spread on art paper (Mitsubishi Toku Art 110K) with a hand proofer having 200 lines per inch to prepare a test piece. The test piece was then irradiated with ultraviolet rays using a metal halide lamp having a power of 160 W/cm (focal length: 13 cm, light condensing type, single lamp; available from Helaeus Holiding GmbH). During the irradiation, the curing rate at which the varnish composition became tack-free was evaluated by finger-touch. Varnish composition of Example 8 was cured not by ultraviolet rays

but by electron beams. The results of the evaluation were ranked into three-stage criterion described below, and the ranks are shown on the column "Curability" of Tables 1 and 2.

(Ranks)

O : Curing rate of 100 m/min or more
Δ : Curing rate of 60 m/min to less than 100 m/min
X : Curing rate of less than 60 m/min

[Evaluation of gloss]

The gloss value was measured using each tack-free test piece after the evaluation of curability. In this measurement, the 60°-reflected gloss was determined with a Murakami digital gloss meter (available from Murakami Color Research Laboratory). The results are shown on the column "Gloss" of Tables 1 and 2.

[Table 1]

| | Example 1 | Example 2 | Example 3 | Example 4 | Example 5 | Example 6 | Example 7 |
|---|---|---|---|---|---|---|---|
| DPHA | 15 | 15 | 15 | 15 | 15 | 15 | 15 |
| TMPTA | 65 | 55 | 45 | 55 | 55 | 55 | 55 |
| Oligomer | 9 | | | | | | |
| Castor oil | 1 | 20 | 30 | | | | |
| CNSL | | | | 20 | | | |
| UL-513 | | | | | 20 | | |
| Tall oil | | | | | | 20 | |
| Varnish 1 | | | | | | | 20 |
| IR-184 | 7 | 7 | 7 | 7 | 7 | 7 | 7 |
| IR-369 | 3 | 3 | 3 | 3 | 3 | 3 | 3 |
| Total | 100 | 100 | 100 | 100 | 100 | 100 | 100 |
| Stability | O | O | O | O | O | O | O |
| Curability | O | O | O | O | O | O | O |
| Gloss | 87 | 84 | 81 | 83 | 80 | 81 | 84 |

[Table 2]

| | Example 8 | Example 9 | Comparative example 1 | Comparative example 2 | Comparative example 3 | Comparative example 4 |
|---|---|---|---|---|---|---|
| DPHA | 15 | 15 | 15 | 15 | 15 | 15 |
| TMPTA | 55 | 55 | 45 | 15 | 45 | 55 |
| Oligomer | 20 | 10 | 10 | | 10 | |
| Castor oil | 20 | | | 60 | | |
| CNSL | | | | | | |
| UL-513 | | | | | | |
| Soybean oil | | 10 | 20 | | | |
| Linseed oil | | | | | 20 | |
| Varnish 2 | | | | | | 20 |

(continued)

| | Example 8 | Example 9 | Comparative example 1 | Comparative example 2 | Comparative example 3 | Comparative example 4 |
|---|---|---|---|---|---|---|
| IR-184 | | 7 | 7 | 7 | 7 | 7 |
| IR-369 | | 3 | 3 | 3 | 3 | 3 |
| Total | 100 | 100 | 100 | 100 | 100 | 100 |
| Stability | O | O | X | O | X | X |
| Curability | O | O | X | X | X | O |
| Gloss | 83 | 81 | 68 | 72 | 65 | 64 |

Tables 1 and 2 evidentially show that the inventive varnish composition increases the biomass content and maintains superior properties as a varnish composition.

## Claims

1. An active energy ray-curable varnish composition containing a compound having one or more ethylenically unsaturated bonds, wherein the varnish composition satisfies Conditions (A) and (B):

    Condition (A): the varnish composition contains a specific ingredient that has no ethylenically unsaturated bonds, has a solubility parameter (sp) value (measured by turbidimetric titration) of 9.0 $(cal/cm^3)^{1/2}$ to less than 11.0 $(cal/cm^3)^{1/2}$, and comprises a compound having a structure derived from animal or vegetable ingredients in a content of 0.1 mass% to 50 mass% in the entire composition; and
    Condition (B): the varnish composition contains oil and fat that is derived from animals or vegetables and has a solubility parameter (sp) value (measured by turbidimetric titration) of less than 9.0 $(cal/cm^3)^{1/2}$ or 11.0 $(cal/cm^3)^{1/2}$ or more in a content of less than 15 mass% in the entire composition.

2. The active energy ray-curable varnish composition according to claim 1, wherein the specific ingredient is at least one selected from the group consisting of (1) a specific liquid ingredient that has no ethylenically unsaturated bonds, has a solubility parameter (sp) value (measured by turbidimetric titration) of 9.0 $(cal/cm^3)^{1/2}$ to less than 11.0 $(cal/cm^3)^{1/2}$, and is oil and fat derived from animals and vegetables or a modified product thereof; and (2) a specific resin that has no ethylenically unsaturated bonds, has a solubility parameter (sp) value (measured by turbidimetric titration) of 9.0 $(cal/cm^3)^{1/2}$ to less than 11.0 $(cal/cm^3)^{1/2}$, and comprises a structure derived from vegetable ingredients in a polymer.

3. The active energy ray-curable varnish composition according to claim 2, wherein the specific liquid ingredient is a non-edible oil and fat or a modified product thereof.

4. The active energy ray-curable varnish composition according to claim 2 or 3, wherein the specific liquid ingredient is at least one selected from the group consisting of castor oil, coconut oil, cashew nut shell oil, tall oil, modified products thereof, and epoxidized vegetable oil.

5. A method for producing the active energy ray-curable varnish composition according to any one of claims 2 to 4, comprising a step of dissolving the specific resin in the heated specific liquid ingredient and/or compound having the ethylenically unsaturated bonds to prepare a varnish.

6. A method for manufacturing printed matter, comprising a step of applying the active energy ray-curable varnish composition according to any one of claims 1 to 4.

## INTERNATIONAL SEARCH REPORT

International application No. PCT/JP2020/007691

A. CLASSIFICATION OF SUBJECT MATTER
Int.Cl. C08F290/06(2006.01)i, C09D4/00(2006.01)i, C09D191/00(2006.01)i, C08F2/44(2006.01)i
FI: C09D4/00, C09D191/00, C08F2/44B, C08F290/06
According to International Patent Classification (IPC) or to both national classification and IPC

B. FIELDS SEARCHED
Minimum documentation searched (classification system followed by classification symbols)
Int.Cl. C08F290/06, C09D4/00, C09D191/00, C08F2/44

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 61-250064 A (NIPPON SHOKUBAI KAGAKU KOGYO CO., LTD.) 07.11.1986 (1986-11-07), entire text | 1-6 |
| A | JP 2011-519396 A (ARMSTRONG WORLD INDUSTRIES, INC.) 07.07.2011 (2011-07-07), entire text | 1-6 |
| A | JP 2012-188660 A (TOYO INK SC HOLDINGS CO., LTD.) 04.10.2012 (2012-10-04), entire text | 1-6 |
| A | JP 04-041564 A (TOYO INK MFG CO., LTD.) 12.02.1992 (1992-02-12), entire text | 1-6 |
| A | JP 2002-338848 A (TOYO INK MFG CO., LTD.) 27.11.2002 (2002-11-27), entire text | 1-6 |

☐ Further documents are listed in the continuation of Box C.    ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19.05.2020 | 02.06.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/007691

| | | |
|---|---|---|
| JP 61-250064 A | 07.11.1986 | (Family: none) |
| JP 2011-519396 A | 07.07.2011 | US 2009/0275674 A1<br>entire text<br>US 2013/0230729 A1<br>US 2015/0232687 A1<br>WO 2009/134388 A1<br>EP 2703461 A1<br>KR 10-2011-0007236 A<br>CN 102046874 A |
| JP 2012-188660 A | 04.10.2012 | (Family: none) |
| JP 04-041564 A | 12.02.1992 | (Family: none) |
| JP 2002-338848 A | 27.11.2002 | US 2003/0054103 A1<br>entire text |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014167088 A
- JP H1017787A B
- JP 2004315546 A


### Non-patent literature cited in the description


- **K. W. SUH ; J. M. CORBETT.** *J. Appl. Polym. Sci.,* 1968, vol. 12, 2359